**Europäisches Patentamt**

**European Patent Office**

**Office européen des brevets**

(19)

(11) Veröffentlichungsnummer: **0 036 039**
**B1**

(12) **EUROPÄISCHE PATENTSCHRIFT**

(45) Veröffentlichungstag der Patentschrift:
11.07.84

(51) Int. Cl.³: **C 01 G 43/06**

(21) Anmeldenummer: **80107475.8**

(22) Anmeldetag: **29.11.80**

(54) **Verfahren zur Beseitigung festhaftender bzw. staubförmiger Ablagerungen in Anlagen zur Handhabung von Uranhexafluorid.**

(30) Priorität: **14.03.80 DE 3009933**

(43) Veröffentlichungstag der Anmeldung:
**23.09.81 Patentblatt 81/38**

(45) Bekanntmachung des Hinweises auf die Patenterteilung:
**11.07.84 Patentblatt 84/28**

(84) Benannte Vertragsstaaten:
**FR GB NL**

(56) Entgegenhaltungen:
DE - A - 2 504 840
GB - A - 840 311

**GMELIN HANDBUCH DER ANORGANISCHEN CHEMIE,**
**Springer Verlag, 1980, Uran, Ergänzungsband C8,**
**System Nummer 55 Berlin, Heidelberg, New York**

(73) Patentinhaber: **Kernforschungszentrum Karlsruhe GmbH, Weberstrasse 5, D-7500 Karlsruhe 1 (DE)**
Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Bacher, Walter, Dr. Dipl. Chem., Hans Thoma Strasse 3f, D-7513 Stutensee-Fr. (DE)**
Erfinder: **Eberhard, Jacob, Dr. Dipl.Chem., Possenhofenerstrasse 12, D-8133 Feldafing (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Beseitigung festhaftender bzw. staubförmiger Ablagerungen in Anlagen zur Handhabung von Uranhexafluorid, bei dem die Ablagerungen in $UF_6$ zurückverwandelt werden.

In Anlagen zur Handhabung von Uranhexafluorid, insbesondere in Anlagen zur Anreicherung von U235, können kostspielige Betriebsstörungen durch gewisse Ablagerungen von Uranverbindungen entstehen.

Es ist bereits bekannt, Ablagerungen in Anlagen zur Handhabung von Uranhexafluorid dadurch zu beseitigen, dass man die Ablagerungen, die aus Uranhalogeniden bestehen, mit fluorhaltigen Substanzen wie Jodheptafluorid, in Uranhexafluorid umwandelt (DE-A-2 504 840). Dieses Verfahren ist erfolgreich anwendbar, wenn die Ablagerungen überwiegend aus Reduktionsprodukten des $UF_6$, wie $UF_5$, $U_2F_9$ oder $UF_4$ bestehen. Bei gleichzeitiger Anwesenheit von sauerstoffhaltigen Uranverbindungen bleibt die Beseitigung der Ablagerungen jedoch unvollständig.

Durch die Behandlung der Ablagerungen mit $ClF_3$ ist zwar deren vollständige Beseitigung möglich, allerdings bei Temperaturen im Bereich von 353K bis 363K mit wünschenswerter Geschwindigkeit (bei 323K nur mit mässiger Geschwindigkeit). Bei niedrigeren Temperaturen besteht die Gefahr, dass sich bei Anwesenheit von wasserhaltigem Uranylfluorid durch die Hydrolyse des $ClF_3$ hochexplosives $ClO_2$ bildet.

Zwar ist aus der Druckschrift Gmelin, Handbuch der organischen Chemie, Springer Verlag, 1980, Uran, Ergänzungsband C 8, System Nr. 55, Berlin, Seite 283, letzter Absatz eine Reaktion von $UOF_4$ mit Borhalogenid (mit $BCl_3$ zu $UCl_6$; mit $BBr_3$ zu $UBr_5$) bekannt, doch ist $UOF_4$, kein Zersetzungsprodukt des $UF_6$ in technischen Anlagen.

Der Erfindung liegt die Aufgabe zugrunde, ein Verfahren zu schaffen, das auch sauerstoffhaltige Ablagerungen vom Typ $UO_2F_2$ und deren Hydrate in einer $UF_6$-Anlage ohne die mit dem Einsatz von $ClF_3$ verbundenen Nachteile beseitigt.

Gelöst wird die der Erfindung zugrundeliegende Aufgabe dadurch, dass

a) die Ablagerungen mit gasförmigem Phosphortribromid beaufschlagt werden,

b) die Ablagerungen mit einem gasförmigen Borhalogenid, ausgenommen Bortrifluorid, umgesetzt werden und

c) die durch die Umsetzung entstehenden Uranhalogenide mit einer fluorhaltigen Substanz in Uranhexafluorid umgewandelt werden.

Als fluorhaltige Substanzen können sowohl Jodheptafluorid als auch andere Halogenfluoride verwendet werden. Besonders bewährt hat sich jedoch Fluor selbst.

Im folgenden wird die Erfindung anhand eines Ausführungsbeispiels erläutert:

In einem 15-l-Edelstahlbehälter mit Saphirsichtfenster wurden 2,3 g $UF_6$ mit Wasserdampf hydrolisiert. Der gebildete Nebel von «Hydrolysestaub» ($UO_2F_2 \cdot 0,7$-$1,2$ $H_2O$) setzte sich überwiegend auf dem Boden des Reaktors ab.

Der Reaktor wurde nun bei Raumtemperatur mit 3,3 mbar gasförmigem Phosphortribromid beaufschlagt. Nach 0,5 h Einwirkdauer wurde das $PBr_3$ bis auf einen Restdruck von 0,7 mbar abgepumpt.

Anschliessend wurde der Reaktor bei Raumtemperatur mit 54 mbar gasförmigem Bortribromid, $BBr_3$, beaufschlagt. Nach 6 h Einwirkdauer waren die uranhaltigen Ablagerungen schwarzbraun gefärbt. Sämtliche gasförmigen Stoffe wurden nun bis auf $10^{-3}$ mbar abgepumpt.

Durch Einlassen von 107 mbar Fluor (ebenfalls bei Raumtemperatur) wurden die Ablagerungen in 1 h vollständig verflüchtigt. Die infrarotanalytische Untersuchung der gasförmigen Produkte zeigte $UF_6$ und $BrF_5$ neben kleineren Mengen $BF_3$ bzw. gemischter Borhalogenide und $PF_5$, die gepumpt wurden.

Aus der Infrarotanalyse konnte zweifelsfrei geschlossen werden, dass sich bei Anwendung des erfindungsgemässen Verfahrens keine explosiven Produkte gebildet hatten.

Wie das Beispiel zeigt, zeichnet sich das erfindungsgemässe Verfahren insbesondere dadurch aus, dass es bei RT und relativ niedrigen Partialdrücken der angewandten Stoffe durchgeführt werden kann, und dass sich keine explosiven Gemische bilden.

## Patentansprüche

1. Verfahren zur Beseitigung festhaftender bzw. staubförmiger Ablagerungen in Anlagen zur Handhabung von Uranhexafluorid, bei dem die Ablagerungen in $UF_6$ zurückverwandelt werden, dadurch gekennzeichnet, dass

a) die Ablagerungen mit gasförmigem Phosphortribromid beaufschlagt werden,

b) die Ablagerungen mit einem gasförmigen Borhalogenid, ausgenommen Bortrifluorid, umgesetzt werden und

c) die durch die Umsetzung entstehenden Uranhalogenide mit einer fluorhaltigen Substanz in Uranhexafluorid umgewandelt werden.

2. Verfahren nach Anspruch 1, dadurch gekennzeichnet, dass als fluorhaltige Substanz Fluor verwendet wird.

## Claims

1. Procedure for eliminating sticking and dusty deposits, respectively, in system for handling uranium hexafluoride by which the deposits are reconverted into $UF_6$, with

a) gaseous phosphorous tribromide applied to the deposits,

b) the deposits reacting with a gaseous boron halogenide, except for boron trifluoride; and

c) the uranium halogenides produced by the reaction converted into uranium hexafluoride with the help of a fluorine containing substance.

2. Procedure according to claim 1 with fluorine used as the fluorine containing substance.

## Revendications

1. Procédé pour l'élimination de sédiments adhérents ou pulvérulents dans des installations de traitement d'hexafluorure d'uranium, avec retransformation des sédiments en $UF_6$, procédé caractérisé en ce que:

a) les sédiments sont traités avec du tribromure de phosphore gazeux;

b) les sédiments sont traités avec un halogénure de bore gazeux, excepté le trifluorure de bore, et;

c) les halogénures de bore formés par cette réaction sont transformés, à l'aide d'une substance fluorée, en hexafluorure d'uranium.

   2. Procédé selon la revendication 1, caractérisé en ce que comme substance fluorée on utilise du fluor.